## Europäisches Patentamt

## European Patent Office

## Office européen des brevets

(11) Veröffentlichungsnummer: **0 122 251**
**B1**

(12) # EUROPÄISCHE PATENTSCHRIFT

(45) Veröffentlichungstag der Patentschrift:
**25.11.87**

(51) Int. Cl.⁴: **A 01 C 3/02**

(21) Anmeldenummer: **84890011.4**

(22) Anmeldetag: **16.01.84**

(54) **Kompostbehälter.**

(30) Priorität: **18.01.83 AT 152/83**

(43) Veröffentlichungstag der Anmeldung:
**17.10.84 Patentblatt 84/42**

(45) Bekanntmachung des Hinweises auf die Patenterteilung:
**25.11.87 Patentblatt 87/48**

(84) Benannte Vertragsstaaten:
**CH DE FR GB LI NL SE**

(56) Entgegenhaltungen:
**CH-A-216 422**
**DE-A-2 514 620**
**DE-C-27 856**
**US-A-1 931 397**
**US-A-3 557 990**

(73) Patentinhaber: **Wüster, Heinz, Auwerk 18, A-6460 Imst/Tirol (AT)**

(72) Erfinder: **Wüster, Heinz, Auwerk 18, A-6460 Imst/Tirol (AT)**

(74) Vertreter: **Berger, Erhard, Dr., Siebensterngasse 39 Postfach 306, A-1071 Wien (AT)**

LIBER, STOCKHOLM 1987

## Beschreibung

Die Erfindung betrifft einen Kompostbehälter aus mindestens vier Ecksteher und aus in an diesen vorgesehenen Taschen aufnehmbaren Lamellen, wobei die Lamellen in den Taschen durch an den Lamellen angebrachte vorspringende Verriegelungselemente verklemmbar sind. Bei einem bekannten Kompostbehälter dieser Art (DE-A-2 514 620) sind diese vorspringenden Verriegelungselemente nachträglich an den Lamellen anzubringende, die Ecksteher durchsetzende Anschlagwinkel, welche jeweils bei in eine Tasche eingesetzter Lamelle von einer Seite durch die Tasche des Ecksteher hindurch bis in Anlage gegen den Ecksteher eingeschoben und dann auf der anderen Seite des Ecksteher an der Lamelle befestigt werden. Diese Art der Verbindung von Ecksteher und Lamellen bringt nicht nur einen beträchtlichen Montageaufwand beim Aufstellen des Kompostbehälters sondern auch den gravierenden Nachteil mit sich, daß die einmal so mit den Ecksteher verbundenen Lamellen nicht jederzeit aus den Taschen einfach herausgenommen werden können, wie dies beispielsweise dann erforderlich ist, wenn frischer Kompost an der Unterseite des Kompostbehälters nach Entfernen einiger weniger unterer Lamellen entnommen werden soll, während die weiter oben angeordneten Lamellen das Kompostgut halten.

Aus der CH-A -248 489 ist ein Kompostbehälter aus mindestens vier Ecksteher und aus in an diesen vorgesehenen Taschen aufnehmbaren Lamellen bekannt, bei dem jeder der Ecksteher aus einem Metallprofil mit vier angeformten Flanschen besteht, von denen die beiden äußeren zu taschenförmigen Vertiefungen zur Aufnahme der Lamellen verformt sind, während die beiden inneren als Endanschläge für die Lamellen dienen. Diese Konstruktion erlaubt, die Lamellen lose in die gebildeten Taschen einzuschieben und zur Entnahme fertigen Kompostes an jeder beliebigen Stelle einfach zu entnehmen.

In der Praxis hat sich allerdings gezeigt, daß, abhängig von den Fertigungstoleranzen der verwendeten Lamellen und vor allem, wenn diese aus Holz bestehen, die Taschen mit genügend Spiel ausgestattet sein müssen, um ein leichtes Einschieben und Ausziehen der Lamellen auch nach längerem Witterungseinfluß zu gewährleisten. Durch die naturbedingte Feuchtigkeitsaufnahme des Holzes quillt dieses und würde sich bei zu wenig Spiel nur mehr schwer entnehmen lassen.

Durch dieses notwendige Spiel ist aber wiederum die Stabilität des so gebauten Kompostbehälters beschränkt, was vor allem bei unebenen Aufstellungsverhältnissen ungünstig ist.

Aus der CH-A-216 422 ist eine Stützwand für einen Düngerhaufen bekannt, welche aus zwischen zwei im Boden eingebetteten Pfosten übereinander angeordnete, in Nuten der Pfosten eingesetzte Bretter besteht. Aufgabe der Erfindung ist es, die angeführten Nachteile zu beseitigen. Dies wird ausgehend von einem Kompostbehälter der eingangs genannten Art erfindungsgemäß dadurch erreicht, daß keilförmige Ausnehmungen in den Taschen angebracht sind, sodaß beim Einstecken der Lamellen in die Taschen jeweils ein vorspringendes Verriegelungselement und eine keilförmige Ausnehmung ineinander greifen.

Durch die erfindungsgemäße Anordnung wird erreicht, daß beim Einstekken der Lamellen in die Taschen durch Eingreifen der Verriegelungselemente der Lamellen in die keilförmigen Ausnehmungen der Taschen die Steher gegen die Lamellen gepreßt werden, wodurch die Stabilität des Kompostbehälters auch bei ausreichendem Spiel der Taschen gegenüber den Lamellen wesentlich erhöht wird, die Lamellen sich aber trotzdem durch einfaches Ziehen nach oben wieder leicht entfernen lassen.

Bei dem erfindungsgemäßen Kompostbehälter übernehmen die einzelnen Lamellen neben ihrer Stützfunktion für das Kompostgut gleichzeitig die vollständige Stabilisierung des kompletten Kompostbehälters, indem sich jede einzelne Lamelle mit ihren Verriegelungselementen an einer keilförmigen Ausnehmung der Tasche eines Ecksteher abstützt. Dabei können jederzeit zum Entnehmen des Kompostes - in der Praxis an der Unterseite des Kompostbehälters - beliebig viele Lamellen ohne Lösen irgendwelcher Schrauben oder Stützstreben entnommen werden, wobei die restlichen Lamellen weiterhin den Kompostbehälter stabilisieren. Bei einem Kompostbehälter, bei dem jeder der Ecksteher aus einem entsprechend geformten Metallprofil mit vier angeformten Flanschen besteht, von denen zwei zur Arretierung der Lamellen dienen und die anderen zu taschenförmigen Vertiefungen zur Aufnahme der Lamellen verformt sind, ist gemäß einem weiteren Merkmal der Erfindung die Anordnung so getroffen, daß die keilförmigen Ausnehmungen in den zu taschenförmigen Vertiefungen geformten Flanschen vorgesehen sind.

Alternativ hiezu können die keilförmigen Ausnehmungen jedoch auch in an den Ecksteher z. B. durch Verschraubung, Vernietung, Verschweißung od. dgl. befestigten Taschen vorgesehen sein.

Die Verriegelungselemente sind vorzugsweise von in die Lamellen nur teilweise eingeschraubten Schrauben gebildet.

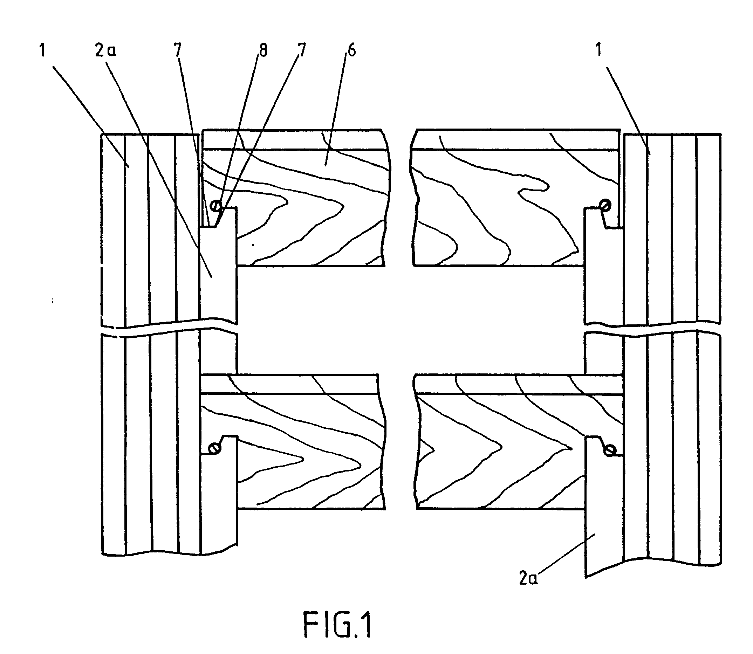

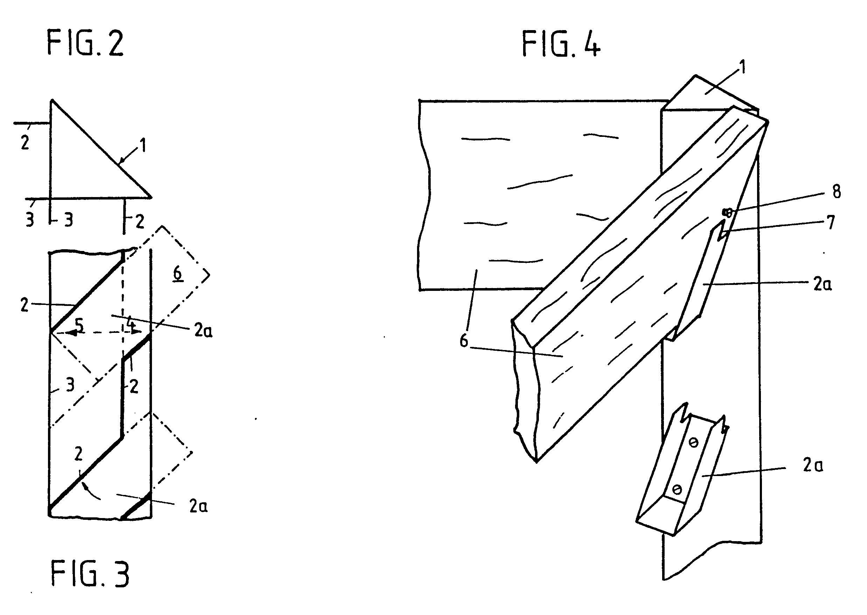

Nachstehend ist die Erfindung anhand der Zeichnung näher erläutert. Es zeigen: Fig. 1 eine teilweise Vorderansicht eines erfindungsgemäßen Kompostbehälters, Fig. 2 und 3 eine Stirnansicht bzw. eine Seitenansicht des Metallprofils eines Ecksteher des Kompostbehälters nach Fig. 1, und Fig. 4 im Schrägriß einen Ecksteher mit daran angeschraubten Taschen.

Wie aus Fig. 1 ersichtlich, sind die Ecksteher 1 des Kompostbehälters mit Taschen 2a versehen, die zur Aufnahme von Lamellen 6 dienen, wobei die außenliegende Seite jeder Tasche 2a mit einer keilförmigen Ausnehmung 7 versehen ist, in die beim Einschieben einer Lamelle 6 ein an der Lamelle angeordnetes Verriegelungselement 8 in Form einer nur teilweise in die Lamelle eingeschraubten Kopfschraube eingreift. Durch das Gleiten der Verriegelungselemente 8 entlang den Keilflächen der Ausnehmungen 7 werden die Ecksteher gegen die Stirnseiten der Lamelle 6 gepreßt und damit die Lamellen verklemmt, wodurch sich eine höhere Stabilität des Kompostbehälters ergibt. Nichtsdestoweniger lassen sich die Lamellen durch einfaches Hochziehen leicht wieder entnehmen.

Die Fig. 2 und 3 zeigen einen der vorzugsweise im Strangpreßverfahren hergestellten und aus einem dreieckigen Kastenprofil mit angeformten Flanschen 2 und 3 bestehenden Ecksteher 1 des Kompostbehälters nach Fig. 1. Wie aus diesen Figuren ersichtlich, sind die die keilförmigen Ausnehmungen aufweisenden Taschen 2a von den Flanschen 2 und 3 des Eckstehers gebildet, und zwar ist hiezu der Flansch 2 durch einen einfachen nachträglichen Stanzvorgang, der auch das Ausstanzen der keilförmigen Ausnehmungen umfaßt, sowohl in Richtung des Pfelies 4 als auch in Richtung des Pfelies 5 verformt und bildet damit taschenförmige Führungen für die Lamellen 6, während die Flansche 3 als Endanschläge für die Lamellen dienen.

Die Erfindung ist auch auf Kompostbehälter anwendbar, bei denen separate Taschen zur Aufnahme der Lamellen 6 nachträglich an den Eckstehern 1 befestigt wurden. Ein Beispiel hiefür zeigt Fig. 4, gemäß welcher die nachträgliche Befestigung der Taschen 2a am Steher 1 mittels Schrauben bewerkstelligt ist. Es ist jedoch auch jede andere Art von Befestigung, wie Vernieten, Verschweißen od. dgl. denkbar.

Wie aus Fig. 4 ersichtlich, kann sowohl an der Außen- als auch an der Innenseite der Tasche 2a eine keilförmige Ausnehmung 7 für den Eingriff mit je einem Verriegelungselement 8 der Lamelle 6 vorgesehen sein, wenn auch eine einzige an der Außenseite der Tasche 2a vorgesehene Ausnehmung 7 für eine wirksame Verklemmung in der Regel genügt. Es versteht sich, daß die Verriegelungselemente 8 nicht unbedingt von Schrauben gebildet sein müssen, sondern auch jede andere geeignete Form aufweisen können.

## Patentansprüche

1. Kompostbehälter aus mindestens vier Eckstehern (1) und aus in an diesen vorgesehenen Taschen (2a) aufnehmbaren Lamellen (6) wobei die Lamellen (6) in den Taschen (2a) durch an den Lamellen (6) angebrachte vorspringende Verriegelungselemente (8) verklemmbar sind, dadurch gekennzeichnet, daß keilförmige Ausnehmungen (7) in den Taschen (2a) angebracht sind, sodaß beim Einstecken der Lamellen (6) in die Taschen (2a) jeweils ein vorspringendes Verriegelungselement (8) und eine keilförmige Ausnehmung (7) ineinander greifen.

2. Kompostbehälter nach Anspruch 1, bei welchem jeder der Ecksteher aus einem entsprechend geformten Metallprofil mit vier angeformten Flanschen besteht, von denen zwei zur Arretierung der Lamellen dienen und die anderen zu taschenförmigen Vertiefungen zur Aufnahme der Lamellen verformt sind, dadurch gekennzeichnet, daß die keilförmigen Ausnehmungen (7) in den zu taschenförmigen Vertiefungen geformten Flanschen (2) vorgesehen sind.

3. Kompostbehälter nach Anspruch 1, dadurch gekennzeichnet, daß die keilförmigen Ausnehmungen (7) in an den Eckstehern (1) z. B. durch Verschraubung, Vernietung, Verschweißung od. dgl. befestigten Taschen (2a) vorgesehen sind.

4. Kompostbehälter nach einem der Ansprüche 1 bis 3, dadurch gekennzeichnet, daß die Verriegelungselemente (8) von in die Lamellen (6) nur teilweise eingeschraubten Schrauben gebildet sind.

## Claims

1. Compost container consisting of at least four corner posts (1) and of bars (6) which can be accommodated in pockets (2a) provided at these posts, whereby the bars (6) can be locked in the pockets (2a) by projecting locking components (8) fitted to the bars (6) characterised in that wedge-shaped recesses (7) are provided in the pockets (2a) so that when the bars (6) are inserted in the pockets (2a) a projecting locking component (8) and a wedge-shaped recess (7) engage with each other in each case.

2. Compost container according to claim 1, on which each of the corner posts consists of an appropriately shaped metal section with four flanges formed on it, two of which are used for locking the bars whilst the others are formed into pocket-shaped recesses for accommodating the bars, characterised in that the wedge-shaped recesses (7) are provided in the flanges (2) which are formed into pocket-shaped recesses.

3. Compost container according to claim 1, characterised in that the wedge-shaped recesses (7) are provided in pockets (2a) secured to the corner posts (1) for example by bolting, riveting, welding, etc.

4. Compost container according to one of claims 1 to 3 characterised in that the locking components (8) are formed from bolts which are only partially bolted into the bars (6).

**Revendications**

1. Bac à compost constitué d'au moins quatre montants d'angle (1) et de lames (6) destinées à être reçues dans des réceptacles (2a) prévus sur ces montants, les lames (6) pouvant être coincées dans les réceptacles (2a) au moyen d'éléments de verrouillage (8) saillants fixés aux lames (6), caractérisé en ce que des évidements en forme de coins (7) sont ménagés dans les réceptacles (2a) de façon que, lors de l'emboîtement des lames (6) dans les réceptacles (2a), un élément de verrouillage saillant (8) et un évidement en forme de coin (7) viennent chaque fois en prise l'un avec l'autre.

2. Bac à compost selon la revendication 1, dans lequel chacun des montants d'angle se compose d'un profilé métallique de forme appropriée présentant quatre flasques façonnés, deux de ceux-ci servant pour le blocage des lames tandis que le deux autres sont façonnés en renfoncements en forme de réceptacles destinés à recevoir les lames, caractérisé en ce que les évidements (7) en forme de coins sont prévus dans les flasques (2) façonnés en renfoncements en forme de réceptacles.

3. Bac à compost conforme à la revendication 1, caractérisé en ce que les évidements en forme de coins (7) sont prévus dans des réceptacles (2a) fixés aux montants d'angle (1) par exemple par vissage, rivetage, soudage ou analogue.

4. Bac à compost conforme à l'une des revendications 1 à 3, caractérisé en ce que les éléments de verrouillage (8) sont formés de vis qui ne sont que partiellement vissées dans les lames (6).

FIG.1

0 122 251

FIG. 2

FIG. 4

FIG. 3